# EUROPEAN PATENT APPLICATION

(11) **EP 1 061 040 A1**
(43) Date of publication of application: **20.12.2000**
(21) Application number: 00304950.9
(22) Date of filing: 12.06.2000
(51) Int. Cl.: C01B 31/02

(54) **Mass purification method of carbon nanotubes**

(30) Priority: 15.06.1999 KR 9922420; 02.06.2000 KR 0030351
(71) Applicant: Iljin Nanotech Co., Ltd., Seoul (KR); Lee, Cheol-jin, Gunsan-city, Jeonlabuk-do (KR)
(72) Inventor: Lee, Cheol-Jin, Gunsan-City, Jeonlabuk-do (KR); Yoo, Jae-Eun, Seongbuk-gu, Seoul (KR)
(74) Representative: Stuttard, Garry Philip

(57) **Abstract**

A mass purification method of carbon nanotubes, capable of removing impurities sticking to carbon nanotubes. The purification method involves two wet purification steps and one dry purification step, which are performed in sequence. The first wet purification of crude carbon nanotubes is carried out with acid solution. In the second wet purification step, the carbon nanotubes from the first wet purification process are purified using an acetone and acid solution. The dry purification step uses a purification gas to purify the carbon nanotubes from the second wet purification step.

## Description

### BACKGROUND OF THE INVENTION

### 1. Field of the Invention

The present invention relates to a mass purification method of carbon nanotubes.

### 2. Description of the Related Art

Carbon nanotubes are miniature cylindrical structures with a diameter on the order of a few nanometers and an aspect ratio of 10 to 1000. Also, carbon nanotubes exhibit conductivity in arm-chair structure and semi-conductivity in zig-zag structure, and are applied as an electron emission source for field emission devices, white light sources, lithium secondary batteries, hydrogen storage cells, transistors and cathode ray tubes (CRTs), or composite. Such industrial applications of carbon nanotubes is ensured by high purity carbon nanotubes.

An arc discharge method (C.Journet et al., *Nature*, 388, 756 (1997) and D.S. Bethune et al., *Nature*, 363, 605 (1993)) and a laser deposition method (R.E.Smally et al., *Science*, 273, 483 (1996)), which are used for the synthesis of carbon nanotubes, produce crude carbon nanotubes, rather than pure carbon nanotubes. The crude carbon nanotubes include a variety of impurities, such as graphite phase or amorphous phase carbon lumps, carbon particles (smaller than carbon lumps and sticking to the surface of individual carbon nanotubes), or catalytic metal particles.

A gas phase synthesis method (R.Andrews et al., *Chem. Phys. Lett*., 303, 468, 1999), which is profitable for mass synthesis of carbon nanotubes, also produces excess catalytic metal lumps and carbon particles sticking to the inner and outer walls of carbon nanotubes.

As for a thermal chemical vapor deposition (CVD) method (W.Z.Li et al., *Science*, 274, 1701 (1996) and Shinohara et al., *Japanese J. of Appl. Phys*., 37, 1257 (1998)), or a plasma-enhance CVD method (Z.F.Ren et al., *Science*, 282, 1105 (1998)), production of carbon lumps decreases compared to use of the arc discharge method, laser vaporization method and gas phase synthesis method, which were previously mentioned. However, carbon particles still adhere to the surface or side walls of carbon nanotubes.

To remove such impurities from crude carbon nanotubes, ultrasonic vibration cleaning, centrifugal separation, chemical precipitation, filtering and the like have been employed. However, these purification methods are disadvantageous in terms of their low purification efficiency and low yield.

### SUMMARY OF THE INVENTION

To solve the above problems, it is an objective of the present invention to provide a method of purifying crude carbon nanotubes on a large scale with high purity and high yield, by removing a variety of impurities present in the crude carbon nanotubes.

The objective of the present invention is achieved by a purification method including two wet purification steps and one dry purification step, which are sequentially performed. The first wet purification step purifies crude carbon nanotubes with acid solution. The second wet purification step purifies the product of the first wet purification step in an acetone and acid solution by application of ultrasonic vibration. The last dry purification step purifies the product of the second wet purification step using a purification gas.

The first wet purification step comprises immersing unpurified crude carbon nanotubes into the acid solution, washing the acid-treated carbon nanotubes, and filtering off separated impurities.

Preferably, the acid solution is nitric acid or hydrochloric acid.

The second wet purification step comprises immersing the crude carbon nanotubes from the first wet purification step in the acetone and acid solution to which ultrasonic vibration is applied. The carbon nanotubes treated with the acetone and acid solution are washed, and ultrasonic vibration is applied to the washed carbon nanotubes, to separate impurities sticking to the surface of the carbon nanotubes. Then, the impurities are filtered off.

Preferably, the acetone and acid solution is a solution containing acetone, nitric acid and hydrochloric acid, or a solution containing acetone, nitric acid and acetic acid.

Preferably, the drying purification step comprises supplying the purification gas into a reaction furnace of a thermal diffusion apparatus to purify the carbon nanotubes using the purification gas thermally decomposed in the reaction furnace.

Preferably, the purification method further comprises a ramp-up step, before the purification of the carbon nanotubes, of raising the temperature of the reaction furnace to a purification temperature, while supplying an inert gas into the reaction furnace, and a ramp-down step, after the purification of the carbon nanotubes, of lowering the temperature of the reaction furnace while supplying an inert gas into the reaction furnace to exhaust the purification gas.

### BRIEF DESCRIPTION OF THE DRAWINGS

The above objective and advantages of the present invention will become more apparent by describing in detail a preferred embodiment thereof with reference to the attached drawings in which:
FIG. 1 is a flowchart illustrating a purification method of carbon nanotubes according to the present invention;
FIG. 2 is a flowchart illustrating in greater detail the first wet etching purification step of FIG. 1;
FIG. 3 is a flowchart illustrating in greater detail the second wet etching purification step of FIG. 1;
FIG. 4 is a sectional view of a thermal diffusion apparatus used in the dry purification step;
FIG. 5 is a timing chart illustrating the control of temperature in the dry purification step; and
FIG. 6 is a timing chart illustrating the pulsing of gases in the dry purification step.

### DETAILED DESCRIPTION OF THE INVENTION

The present invention will now be described more fully with reference to the accompanying drawings, in which preferred embodiments of the invention are shown. This invention may, however, be embodied in many different forms and should not be construed as being limited to the embodiments set forth herein. Rather, these embodiments are provided so that this disclosure will be thorough and complete, and will fully convey the concept of the invention to those skilled in the art. In the drawings, the diffusion furnace apparatus is schematically illustrated for explanation.

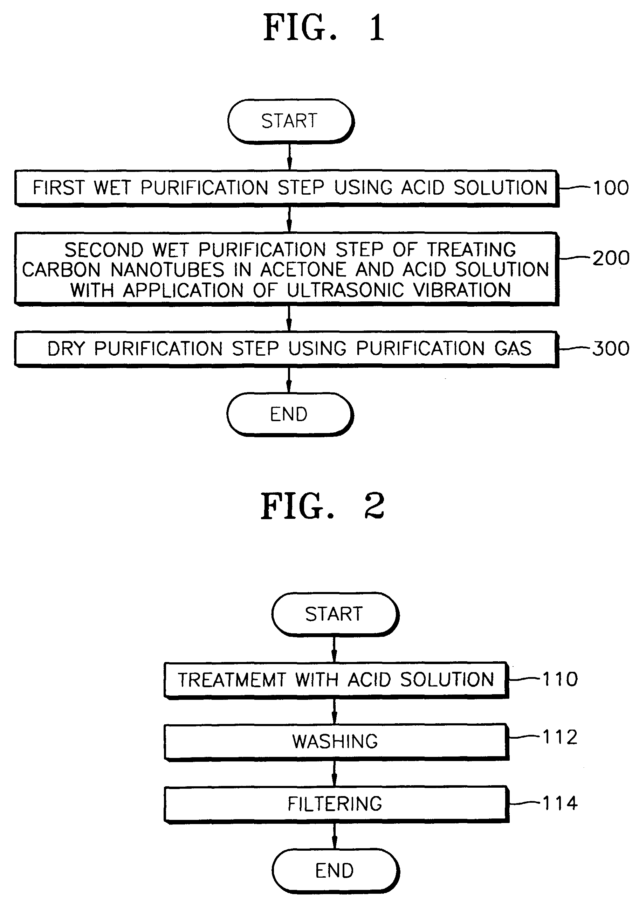

In a purification method of carbon nanotubes according to the present invention, referring to FIG. 1, a first wet purification step is performed by treating unpurified crude carbon nanotubes with acid solution (step 100). The inventive purification method can be applied to carbon nanotubes produced by any method, i.e., by an arc discharge, laser vaporization, gas phase synthesis, or plasma-enhanced chemical vapor deposition (CVD) method. It is preferable to apply the inventive purification method to carbon nanotubes produced on a large scale by gas phase synthesis or an arc discharge method. This is because wet etching enables concurrent removal of a large amount of impurities from a large amount of carbon nanotubes. On the other hand, when purifying vertically aligned carbon nanotubes by wet purification, there is a problem in that vertically alignment of carbon nanotubes is easily changed and also vertically aligned carbon nanotubes easily separate from the substrate due to damage of catalytic metal particles. However, the two synthesis methods are applied for the purpose of mass production, rather than for obtaining a vertically aligned product, and thus there is no problem in application of the wet purification technique to carbon nanotubes produced by the gas phase synthesis and arc discharge methods.

In particular, referring to FIG. 2, the first wet purification step starts from treating crude carbon nanotubes with acid solution (step 110).

As the acid solution, nitric acid solution or hydrochloric acid solution is used. Here, the nitric acid solution and the hydrochloric acid solution are 1:50 dilutions by using water. Preferably, crude carbon nanotubes are dipped into the acid solution contained in a purification bath for 1 to 40 hours to displace impurities, for example, carbon lumps, carbon particles and catalytic metal lumps.

Hydrochloric acid dissociates into H⁺ and Cl⁻ ions in the solution, and nitric acid dissociates into H⁺ and NO₃⁻. Such H⁺ ions remove carbon lumps or carbon particles, and Cl⁻ and NO₃⁻ remove catalytic metal particles.

Following this, the acid-treated carbon nanotubes are washed with deionized water (step 112). Deionized water is supplied into the purification bath containing carbon nanotubes and acid solution, to wash carbon nanotubes as it flows over them.

Then, the washed carbon nanotubes are passed through a metal mesh filter having a mesh size of 300µm or less to filter off carbon lumps, carbon particles, and catalyst metal lumps (step 114), which results in primarily purified carbon nanotubes.

Next, a second wet purification step is performed by applying ultrasonic vibration to the primarily purified carbon nanotubes obtained from step 100, in a solution of acetone and acid (step 200 of FIG. 1).

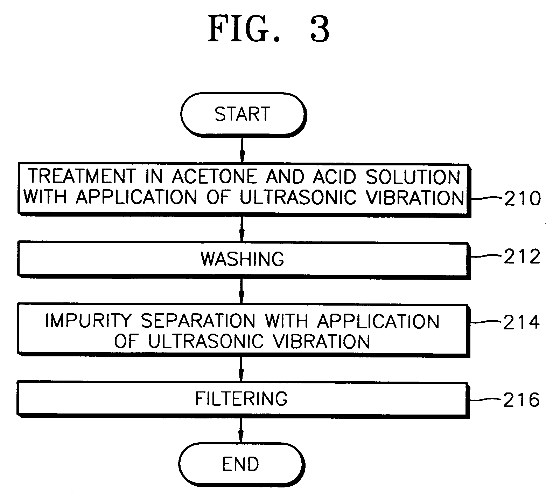

In particular, referring to FIG. 3, the second wet purification step is started from treating the primarily purified carbon nanotubes with acetone and acid solution by application of ultrasonic vibration (step 210).

Preferably, the acetone and acid solution contains acetone (50%), nitric acid (30%) and hydrochloric acid (20%) in a ratio of 1:1:1 by volume, or acetone (50%), nitric acid (20%) and acetic acid (30%) in a ratio of 1:1:1 by volume. Preferably, the primarily purified carbon nanotubes are immersed into the acetone and acid solution contained in a purification bath and ultrasonic wave vibration is applied for 1 to 4 hours. The second wet purification step, which is refined purification by ultrasonic vibration, displaces carbon lumps, carbon particles and catalytic metal lumps remaining after the first wet purification.

Following this, acetone and deionized water are supplied into the purification bath containing carbon nanotubes and the acetone and acid solution, to wash the carbon nanotubes from step 210 by flowing over them (step 212).

The resultant carbon nanotubes from step 212 are placed into a ultrasonic cleaning apparatus containing acetone, and ultrasonic vibration is applied to the cleaning apparatus, which enables separation of carbon lumps, carbon particles and catalytic metal lumps sticking to carbon nanotubes (step 214).

Next, the resultant from step 214 is passed through a metal mesh filter suitable for filtering off carbon lumps, carbon particles and catalytic metal lumps on the order of a few micrometers or less (step 216), so that the second wet purification step is completed, producing secondarily purified carbon nanotubes.

Following this, a dry purification step is carried out with respect to carbon nanotubes purified through the two wet purification processes to give fully pure carbon nanotubes (step 300 of FIG. 1).

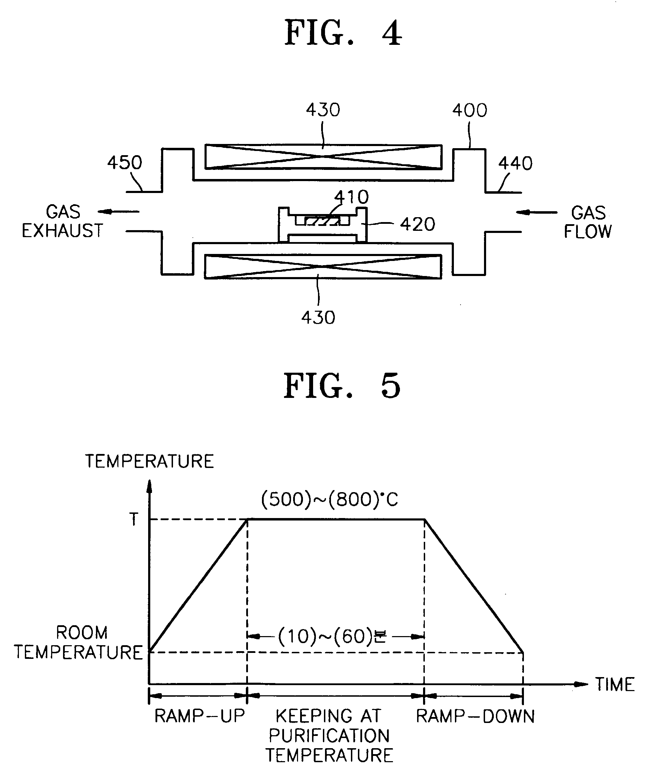

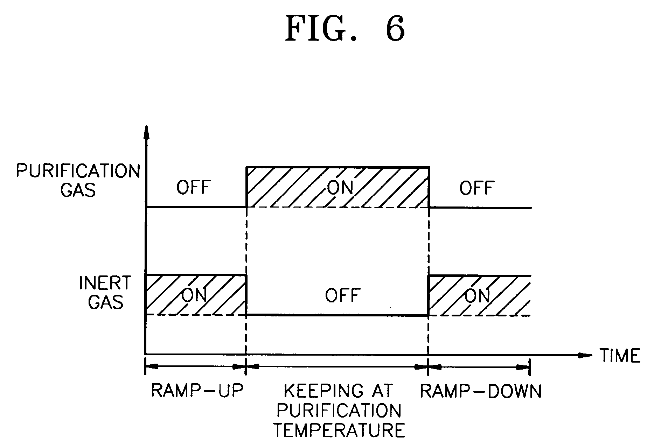

The dry purification step will be described with reference to FIGS. 4 through 6. FIG. 4 is a sectional view of a thermal diffusion apparatus used in the dry purification process, and FIGS. 5 and 6 are timing charts illustrating the control of temperature and the pulsing of gases in the dry purification process.

Purified carbon nanotubes 410, which experienced the first and second wet purification steps, are put on a boat 420. Then, the temperature of a reaction furnace 400 is raised up to a purification temperature T, preferably, to a temperature T of 500 to 800°C, as shown in FIG. 5, by a resistance heater 430 mounted around the outer wall of the reaction furnace 400 (ramp-up step). Preferably, the boat 420 holding the carbon nanotubes 410 is loaded into the reaction furnace 400 when the temperature of the reaction furnace 400 is 400°C or less.

During the ramp-up step, after the loading of the boat 420, an inert gas, for example, argon gas, is supplied into the reaction furnace 400 through a gas inlet 440 at a flow rate of about 200 to 500 sccm, as shown in FIG. 6.

When the temperature of the reaction furnace 400 reaches the purification temperature T, the supply of inert gas is cut off and a purification gas is supplied into the reaction furnace 400 at a flow rate of 40 to 400 sccm for about 10 to 60 minutes to purify carbon nanotubes. The purification gas may be a first purification gas selected from ammonia gas, hydrogen gas, oxygen gas and a mixture gas of these gases, or a second purification gas which may be an acid gas. The acid gas, which is used as the second purification gas, may be hydrochloric acid gas, nitric acid gas, acetic acid gas or a mixture gas of these gases.

If the first purification gas is used, the first purification gas is supplied into the reaction furnace 400 at a flow rate of 40 to 200 sccm for 10 to 30 minutes, while the temperature of the reaction furnace 400 is maintained at 500 to 650°C. If the second purification gas is used, the second purification gas is supplied into the reaction furnace 400 at a flow rate of 100 to 400 sccm for 30 to 60 minutes, while the temperature of the reaction furnace 400 is maintained at 500 to 800°C.

H⁺ ions produced by thermal decomposition of the first purification gas (ammonia gas or hydrogen gas) or the second purification gas (nitric acid, hydrochloric acid or acetic acid) easily remove carbon lumps or carbon particles. Also, Cl⁻ ions or NO³⁻ ions, which are products of thermal decomposition of the second purification gas (hydrochloric acid or nitric acid), are effective in displacing catalytic metal lumps. O²⁻ ions generated by thermal decomposition of oxygen gas, which can also be used as the first purification gas, burn and remove carbon lumps and carbon particles.

After the purification reaction is completed, the supply of purification gas is cut off, the temperature of the reaction furnace 400 is lowered, as shown in FIG. 5, while supplying an inert gas such as argon gas at a flow rate of about 200 to 500 sccm, as shown in FIG. 6, to exhaust the remaining purification gas from the reaction furnace 400 through a gas outlet 450 (ramp-down step). When the temperature of the reaction furnace 400 reaches 400°C or less, the boat 420 with purified carbon nanotubes is unloaded from the reaction furnace 400.

Through the dry purification step (step 300), high purity carbon nanotubes, which are completely free from carbon particles and catalytic metal lumps, are obtained.

The purification method of carbon nanotubes according to the present invention has excellent purifying capability, and can effectively and completely remove byproducts from the synthesis of carbon nanotubes, such as carbon lumps, carbon particles and catalytic metal particles. Thus, superior carbon nanotubes with high purity can be obtained. A purification bath and a thermal diffusion furnace apparatus used in the inventive purification method have a capacity to process a large amount of carbon nanotubes in a batch at one time, and thus purification efficiency is improved.

While this invention has been particularly shown and described with reference to preferred embodiments thereof, it will be understood by those skilled in the art that various changes in form and details may be made thereto without departing from the spirit and scope of the invention as defined by the appended claims.

## Claims

1. A method of purifying carbon nanotubes comprising:
a first wet purification step of purifying crude carbon nanotubes with an acid solution;
a second wet purification step of purifying the product of the first wet purification step using an acetone and acid solution whilst applying ultrasonic vibration; and
a dry purification step of purifying the product of the second wet purification step using a purification gas.

2. A method as claimed in claim 1 wherein the first wet purification step comprises:
immersing the crude carbon nanotubes in the acid solution;
washing the carbon nanotubes treated with the acid solution; and
filtering off impurities separated from the carbon nanotubes.

3. A method as claimed in claim 2 wherein the acid solution is nitric acid aqueous solution or hydrochloric acid aqueous solution.

4. A method as claimed in any preceding claim wherein the second wet purification step comprises:
immersing the crude carbon nanotubes from the first wet purification step in the acetone and acid solution to which ultrasonic vibration is applied;
washing the carbon nanotubes treated with the acetone and acid solution;
applying ultrasonic vibration to the washed carbon nanotubes to separate impurities sticking to the surface of the carbon nanotubes; and
filtering off the impurities.

5. A method as claimed in claim 4 wherein the acetone and acid solution is a solution containing acetone, nitric acid and hydrochloric acid, or a solution containing acetone, nitric acid and acetic acid.

6. A method as claimed in any preceding claim wherein the drying purification step comprises supplying the purification gas into a reaction furnace of a thermal diffusion apparatus to purify the carbon nanotubes using the purification gas thermally decomposed in the reaction furnace.

7. A method as claimed in claim 6 further comprising:
a ramp-up step, before the purification of the carbon nanotubes, of raising the temperature of the reaction furnace to a purification temperature whilst supplying an inert gas into the reaction furnace; and
a ramp-down step, after the purification of the carbon nanotubes, of lowering the temperature of the reaction furnace while supplying an inert gas into the reaction furnace to exhaust the purification gas.

8. A method as claimed in claim 6 wherein the purification gas is a first purification gas selected from the group consisting of ammonia gas, hydrogen gas, oxygen gas and a mixture of these gases, or a second purification gas selected from the group consisting of hydrochloric acid gas, nitric acid gas, acetic acid gas and a mixture of these gases.
